(19) Europäisches Patentamt
European Patent Office
Office européen des brevets

(11) **EP 4 304 256 A1**

(12) **EUROPEAN PATENT APPLICATION**
published in accordance with Art. 153(4) EPC

(43) Date of publication:
**10.01.2024   Bulletin 2024/02**

(21) Application number: **21928474.2**

(22) Date of filing: **02.03.2021**

(51) International Patent Classification (IPC):
***H04W 72/02*** (2009.01)

(52) Cooperative Patent Classification (CPC):
**H04W 72/02**

(86) International application number:
**PCT/CN2021/078767**

(87) International publication number:
**WO 2022/183383 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **METHOD FOR DETERMINING RANDOM ACCESS RESOURCE, AND ELECTRONIC DEVICE AND STORAGE MEDIUM**

(57)     The present application discloses a method for determining a random access resource. The method comprises: a terminal device determining a first random access occasion set; and the terminal device determining an association relationship between the first random access occasion set and a synchronization signal block (SSB), wherein the first random access occasion set belongs to a second random access occasion set determined according to random access occasion configuration information, the first random access occasion set is within a bandwidth supported by the terminal device, and the SSB is associated with a random access resource of the terminal device. Further disclosed are another method for determining a random access resource, and an electronic device and a storage medium.

```
┌─────────────────────────────────────────────┐
│      The UE determines a first RO set        │──── S201
└─────────────────────────────────────────────┘
                      │
                      ▼
┌─────────────────────────────────────────────┐
│ The UE determines an association relationship │──── S202
│    between the first RO set and a SSB         │
└─────────────────────────────────────────────┘
```

**FIG. 4**

**Description**

TECHNICAL FIELD

The present disclosure relates to the technical field of wireless communication, and in particular to a method for determining a random access resource, an electronic device and a storage medium.

BACKGROUND

A Reduced Capability (RedCap) User Equipment (UE) with low complexity, low cost and low capability is introduced in a New Radio (NR) system. How to allocate an effective random access resource for the RedCap UE is a goal that has been pursued all the time.

SUMMARY

Embodiments of the present disclosure provide a method for determining a random access resource, an electronic device and a storage medium, which can allocate an effective random access resource for the RedCap UE.

In a first aspect, embodiments of the present disclosure provide a method for determining a random access resource. The method includes the following operations. A UE determines a first random access occasion (RO) set.

The UE determines an association relationship between the first RO set and a Synchronization Signal Block (SSB).

The first RO set belongs to a second RO set determined according to RO configuration information, the first RO set is located within a bandwidth supported by the UE, and the SSB is associated with a random access resource of the UE.

In a second aspect, embodiments of the present disclosure provide a method for determining a random access resource. The method includes the following operations. A network device determines a first RO set.

The network device determines an association relationship between the first RO set and a SSB.

The first RO set belongs to a second RO set configured by RO configuration information, the first RO set is located within a bandwidth supported by a UE, and the SSB is associated with a random access resource of the UE.

In a third aspect, embodiments of the present disclosure provide a UE. The UE includes a first processing unit. The first processing unit is configured to determine a first RO set, and determine an association relationship between the first RO set and a SSB.

The first RO set belongs to a second RO set determined according to RO configuration information, the first RO set is located within a bandwidth supported by the UE, and the SSB is associated with a random access resource of the UE.

In a fourth aspect, embodiments of the present disclosure provide a network device. The network device includes a second processing unit. The second processing unit is configured to determine a first RO set, and determine an association relationship between the first RO set and a SSB.

The first RO set belongs to a second RO set configured by RO configuration information, the first RO set is located within a bandwidth supported by a UE, and the SSB is associated with a random access resource of the UE.

In a fifth aspect, embodiments of the present disclosure provide a UE. The UE includes a processor and a memory for storing a computer program capable of running on the processor. The processor is configured to perform operations of the above method for determining a random access resource performed by the UE when running the computer program.

In a sixth aspect, embodiments of the present disclosure provide a network device. The network device includes a processor and a memory for storing a computer program capable of running on the processor. The processor is configured to perform operations of the above method for determining a random access resource performed by the network device when running the computer program.

In a seventh aspect, embodiments of the present disclosure provide a chip including a processor. The processor is configured to invoke and run a computer program from a memory to cause a device on which the chip is mounted to perform the above method for determining a random access resource performed by the UE.

In an eighth aspect, embodiments of the present disclosure provide a chip including a processor. The processor is configured to invoke and run a computer program from a memory to cause a device on which the chip is mounted to perform the above method for determining a random access resource performed by the network device.

In a ninth aspect, embodiments of the present disclosure provide a storage medium having stored thereon an executable program, and when the executable program is executed by a processor, the above method for determining a random access resource performed by the UE is implemented.

In a tenth aspect, embodiments of the present disclosure provide a storage medium having stored thereon an executable program, and when the executable program is executed by a processor, the above method for determining a random access resource performed by the network device is implemented.

In an eleventh aspect, embodiments of the present disclosure provide a computer program product including computer program instructions that cause a computer to perform the above method for determining a random access resource performed by the UE.

In a twelfth aspect, embodiments of the present disclosure provide a computer program product including computer program instructions that cause a computer to perform the above method for determining a random access resource performed by the network device.

In a thirteenth aspect, embodiments of the present disclosure provide a computer program causing a computer to perform the above method for determining a random access resource performed by the UE.

In a fourteenth aspect, embodiments of the present disclosure provide a computer program causing a computer to perform the above method for determining a random access resource performed by the network device.

## BRIEF DESCRIPTION OF THE DRAWINGS

FIG. 1 is a diagram of frequency domain positions of random access according to the present disclosure.

FIG. 2 is a diagram of a mapping between an SSB and an RO according to the present disclosure.

FIG. 3 is a structural diagram of a composition of a communication system provided by the embodiments of the present disclosure.

FIG. 4 is a diagram of an alternative process flow of a method for determining a random access resource provided by the embodiments of the present disclosure.

FIG. 5 is a diagram of a first RO set and a second RO set according to the embodiments of the present disclosure.

FIG. 6 is a diagram of an alternative association relationship between an SSB and an RO provided by the embodiments of the present disclosure.

FIG. 7 is a diagram of an alternative association relationship between an SSB and a first RO set provided by the embodiments of the present disclosure.

FIG. 8 is a diagram of another alternative process flow of a method for determining a random access resource provided by the embodiments of the present disclosure.

FIG. 9 is a diagram of another alternative association relationship between an SSB and a first RO set provided by the embodiments of the present disclosure.

FIG. 10 is a structural diagram of an alternative composition of a UE provided by the embodiments of the present disclosure.

FIG. 11 is a structural diagram of an alternative composition of a network device provided by the embodiments of the present disclosure.

FIG. 12 is a structural diagram of a hardware composition of an electronic device provided by the embodiments of the present disclosure.

## DETAILED DESCRIPTION

In order to enable a more detailed understanding of the features and technical contents of the embodiments of the present disclosure, the implementation of the embodiments of the present disclosure would be described in detail below in conjunction with the accompanying drawings, which are provided for illustration purpose only and are not intended to limit the embodiments of the present disclosure.

Before describing the embodiments of the present disclosure, related contents would be briefly explained.

The NR system can support Enhanced Mobile Broadband (eMBB) service to meet requirements of high speed, high spectral efficiency and large bandwidth. In practical application, besides the eMBB service, there are many different types of services, such as sensor networks, video surveillance and wearable services. These types of services have different requirements from the eMBB service in terms of speed, bandwidth, power consumption and cost. Compared with the capabilities of the UE supporting the eMBB, the capabilities of the UE supporting these services are reduced. For example, the supported bandwidth is reduced; the processing time is ample, and the number of antennas is reduced, and the like. Therefore, it is necessary to optimize the NR system for these services and the corresponding UE with the reduced capabilities, and the optimized system is referred to as an NR-light system. In Long Term Evolution (LTE) technology, similar systems have been designed to support terminals with large number of connections, low power consumption and low cost, such as Machine Type Communication (MTC) and Narrow Band Internet of Thing (NB-IoT). In the NR system, it is desirable to introduce similar technologies to make the NR technology to better support other types of services except the eMBB service. The UE supporting theses services has the features of low complexity, low cost and low capability, which is referred to as the RedCap UE.

Compared with the traditional NR UE, the RedCap UE has the features of low complexity and low cost, such as reduced receiving channels, reduced supported transmission bandwidth and so on. At present, the NR UE needs to support at least 2 receiving channels, and the NR UE in some frequency bands needs to support 4 receiving channels. Each receiving channel includes a receiving antenna, a filter, a power amplifier, an analog-to-digital sampler and other components. Therefore, reducing the number of radio frequency channels required by the NR UE would significantly reduce the cost of the terminal. In addition, the traditional NR UE needs to support a wide transmission bandwidth. For example, the NR UE needs to support a maximum bandwidth of 100MHz for the frequency range FR1, and the NR UE needs to support a maximum bandwidth of 400MHz for the frequency range FR2. In order to reduce the cost of the RedCap UE and reduce the power consumption of the RedCap UE, the RedCap UE can support a smaller transmission bandwidth, and can only support the transmission bandwidth of 20MHz for the frequency range FR1 and can only support the transmission bandwidth of 100MHz for the frequency range FR2.

In addition, the RedCap UE may also have features of supporting lower peak rate, supporting ample processing latency, and having larger processing latency.

For a Synchronization Signal/Physical Broadcast Channel Block (SS/PBCH block, SSB): in the NR system, common channels and signals, such as Synchronization Signals (SSs) and broadcast channels, need to cover the whole cell by multi-beam scanning, so as to be received by UE in the cell. Multi-beam transmission of the SS is realized by defining SS/PBCH burst set. One SS/PBCH burst set contains one or more SS/PBCH blocks. One SS/PBCH block is used to carry a SS and a broadcast channel of one beam. Thus, an SS/PBCH burst set can contain SSs for beams with a number equal to SS block number within a cell. The maximum number of SS block number L depends on the frequency range of the system. L is equal to 4 for the system with the maximum frequency range of 3GHz; L is 8 for the system with the frequency domain range from 3GHz to 6GHz, and L is 64 for the system with the frequency range from 6GHz to 52.6 GHz.

An SS/PBCH block (SSB) contains a Primary Synchronization Signal (PSS) of a symbol, a Secondary Synchronization Signal (SSS) of a symbol, and Physical Broadcast Channels (PBCHs) of two symbols. The time-frequency resource occupied by a PBCH includes a Demodulation Reference Signal (DMRS) for demodulating the PBCH.

All SS/PBCH blocks in the SS/PBCH burst set are sent in a time window of 5ms, and are sent repeatedly in a certain period. The period is configured by a parameter of SSB-timing from a higher layer, which includes 5ms, 10ms, 20ms, 40ms, 80ms, 160ms and the like. For the UE, an SSB index is obtained through the received SS/PBCH block, the SSB index ranges from 0 to L-1. L is the maximum number of SSBs corresponding to the frequency range where the SSB is located. The SSB index corresponds to the relative position of the SSB in the time window of 5ms, and the UE obtains the frame synchronization according to the information and the half-frame indication carried in the PBCH. The indexes of SS/PBCH blocks are indicated by the DMRS of the PBCH or the information carried by the PBCH.

The number of SSBs contained in the actually sent SS/PBCH burst set in the cell is not necessarily L, and the SSBs can be sent according to actual requirements. The indexes of the actually sent SSBs are indicated by the indication information ssb-PositionsInBurst of the network device.

For the random access process, in Rel-15, random access resources for random access configuration of the UE are defined, which include 256 kinds of configurations. The random access resource configuration information used by the cell is indicated to the accessed UE through the system message. Each kind of random access resource configuration includes a preamble format, a period, a radio frame offset, a subframe number within a radio frame, a starting symbol within a subframe, a number of random access slots within a subframe, a number of ROs within a random access slot and a duration of a Physical Random Access Channel (PRACH) occasion. The time domain, frequency domain and code domain information of a PRACH resource can be determined through the random access resource configuration. As shown in Table 1 below, the random access configuration with a random access configuration index of 86 includes the preamble format, the radio frame where the RO is located, the subframe, the starting symbol and the time length, etc.

Table 1. Random access configuration and unmatched Spectrum in Spectral for the frequency range FR2

| Random access configur ation index | Preamble format | $n_{SFN}$ mod $x = y$ | | Subframe number | Starting symbol | Number of random access slots within a subframe | $N_{t}^{RA,slot}$ number of ROs within a random access slot in time domain | $N_{dur}^{RA}$ duration of random access |
|---|---|---|---|---|---|---|---|---|
| | | $x$ | $y$ | | | | | |
| 86 | A1 | 1 | 0 | 0,1,2,3,4 , 5,6,7,8, 9 | 7 | 1 | 3 | 2 |

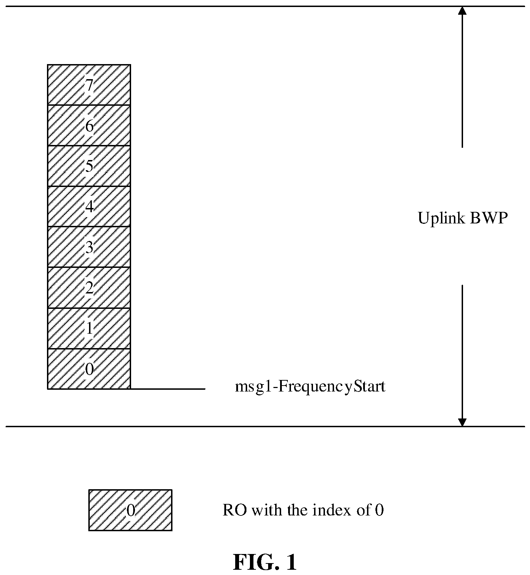

The time domain resource location of random access resource is explained above. The frequency domain resource location of the random access resource may be indicated by the parameters msg1-FrequencyStart and msgl-FDM in a higher layer signaling RACH-ConfigGeneric. The msg1-FrequencyStart is used for determining an offset of a starting position of a Resource Block (RB) of a random access occasion 0 (RACH occasion 0) relative to a starting position in the frequency domain (i.e. BWP 0) of an initial uplink (UL) Bandwidth Part (BWP). That is, the msg1-FrequencyStart is used for determining the starting position in frequency domain of the random access resource. The value of msgl-FDM can be {1, 2, 4, 8}, which is configured to determine the number of RO in the frequency domain. A number of RBs occupied by the random access is jointly determined by the preamble sequence and ΔfRA that are indicated by prach-RootSequenceIndex (see table 6.3.3.2-1 of 3GPP TS 38.211). The number of RBs is represented by the number of RBs of Physical Uplink Shared Channel (PUSCH). The diagram of frequency domain positions of random access is shown in FIG. 1. The msg1-FDM is equal to 8, and the initial uplink BWP includes 8 ROs.

For the UE, the network device indicates the random access resource configuration through the system message, and further indicates the association relationship between the SSB and the random resource, so that the UE can determine the random resource that can be used according to the detected SSB and the association relationship. Each SSB in the SSBs indicated by SSB-PositionsInBurst is associated with one or more PRACH occasion, and each SSB is also associated with multiple contention based preambles. That is, each SSB index is associated with a specific portion of the random access resource configuration indicated in the system message.

The network device configures that N SSBs are associated with a PRACH occasion through the parameter ssb-perRACHE-Occasion, and configures a respective number of contention based preambles on each efficient random access occasion for each SSB through the parameter CB-PreamblesPerSSB. If N<1, one SSB is mapped to 1/N consecutive efficient random access occasion. For example, N=1/4, one SSB is mapped to four RACH occasions, and preambles of R consecutive indexes are mapped to SSB n, 0<= n<= N-1, and each efficient random access occasion starts with preamble index of 0. If N>= 1, N SBBs are mapped to one random access occasion, one SSB corresponds to R preambles; the preambles of R consecutive indexes are mapped to SSB n, 0 <= n<= N-1, and each efficient RACH occasion starts with preamble index $n \cdot N_{preamble}^{total}/N$ . For example, if N=2 and $N_{preamble}^{total} = 64$ , two SSBs are mapped to one RACH occasion. For these two SSBs n, n = 0, 1. When n=0, the preamble index of SSB 0 starts with 0. When n=1, the preamble index of SSB 1 starts with 32. The preamble index of SSB 0 ranges from 0 to 31, and the preamble index of SSB 1 ranges from 32 to configured contention preamble-1. An efficient random access occasion corresponds to the whole number of contention based preambles, and an efficient PRACH occasion corresponds to two SSBs. Therefore, each of the two SSBs occupies a respective part of preambles, which is different from the case where N < 1. $N_{preamble}^{total}$ is configured by totalNumberOfRA-Preambles and is an integer multiple of N. An example of a related signaling is as follows:

    ssb-perRACH-OccasionAndCB-PreamblesPerSSB CHOICE {
    oneFourth ENUMERATED {n4, n8, n12, n16, n20, n24, n28, n32, n36, n40, n44, n48, n52, n56, n60, n64},

In this signaling, oneFourth represents that one SSB is associated with four random access occasions, n4 represents that one SSB is associated with four contention based preambles at one PRACH occasion, and so on. A total number of content based preambles in one random access occasion is CB-preambles-per-SSB * max (1, SSB-per-rach-occasion). CB-preambles-per-SSB is 4, and SSB-per-rach-occasion is 1/4.

The mapping from the SSB to the random access occasion should follow the following sequences: 1) the sequence of the preamble indexes in one random access occasion is incremented; 2) the sequence of the frequency resource indexes of frequency reuse random access occasion is incremented; 3) the sequence of time domain resource indexes of time domain reuse random access occasion in a random access slot is incremented; 4) the sequence of random access slot indexes is incremented.

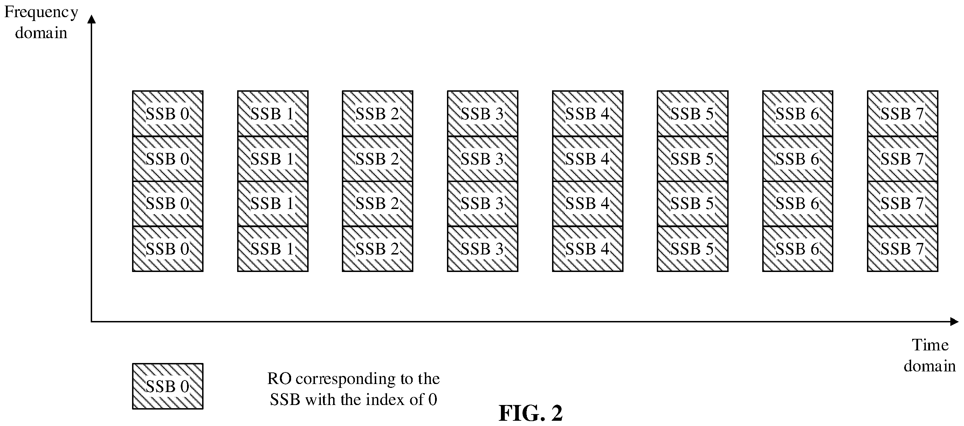

For example, if the number of SSBs is 8, the indexes corresponding to the SSBs are 0 to 7. msg1-FDM = 4 represents that the number of random access occasions in frequency domain is 4. For ssb-perRACH-Occasion= 1/4, the diagram of the mapping between the SSBs and the random access occasions is shown in FIG. 2. One SSB is associated or mapped to four consecutive efficient random access occasions.

In the related technology, in an initial access process, the UE needs to obtain the control resource set CORESET#0 and search space#0 information of a type0 PDCCH from Master Information Block (MIB) information carried by the PBCH to indicate the RB in the frequency domain and the symbol in the time domain of the type0 PDCCH. The CORESET#0 information indicates one of the indexes in the following table. The numbers of RBs and symbols of CORESET#0 and an RB offset from the SSB are obtained according to the index. For the frequency range FR1, in a case where the subcarrier spacing is 15kHz, the bandwidth of CORESET#0 may be configured to be 24 RBs, 48 RBs and 96 RBs to correspond to the bandwidth of 5MHz, 10MHz, 20MHz, respectively. In a case where the subcarrier spacing is 30kHz, a maximum number of RBs configured for CORESET#0 is 48 and therefore the bandwidth of 20MHz is not exceeded. The UE receives scheduling information of Physical Downlink Shared Channel (PDSCH) carrying System Information Block (SIB) through type0 PDCCH, thereby receiving SIB1 information. For the frequency range FR1, the RedCap UE may support a bandwidth of 20MHz at the initial access stage, which is greater than or equal to the bandwidth of CORESET#0, so that the type0 PDCCH can be successfully received. Similarly, for the frequency range FR2, the RedCap UE may support a bandwidth of 100MHz at the initial access stage, which is also greater than or equal to the bandwidth of CORESET#0.

The UE may receive scheduling information of the PDSCH carrying the SIB 1 through the type0 PDCCH, thereby receiving SIB1 information. From the SIB1 information, the UE may obtain configuration information of an initial downlink BWP and an initial uplink BWP. The sending and receiving of the channel in the random access process of the UE may be performed on the initial downlink BWP and the initial uplink BWP. In the prior art, the bandwidth of the initial uplink BWP is allowed to exceed the bandwidth of CORESET#0. If the cell supports the access of the RedCap UE and follows the existing configuration of the initial uplink BWP, the bandwidth of the initial uplink BWP may exceed the bandwidth capability of the RedCap UE, resulting in the RedCap UE being unable to correctly receive and send channels in the initial access stage. Since the bandwidth supported by the RedCap UE may be less than the initial uplink bandwidth or the initial downlink bandwidth, the random access occasion within the bandwidth range of the RedCap UE may be less than the random access occasion within the initial uplink bandwidth or the initial downlink bandwidth range. The random access occasion within the initial uplink bandwidth or the initial downlink bandwidth range is associated with all SSBs corresponding to the random access resources configured by the network, resulting in that the random access occasion within the bandwidth range of the RedCap UE cannot be associated with all SSBs corresponding to the random access resources configured by the network. In this scenario, if the RedCap UE detects that a certain SSB meets the requirements but the SSB cannot be associated with the random access occasion within the bandwidth range of the RedCap UE, the RedCap UE cannot select the random access resource associated with the SSB. That is, in the related art, an effective random access resource cannot be allocated for the RedCap UE.

In specific implementation, the above problem may be solved through the following ways. For example, the RedCap UE performs frequency modulation, and the bandwidth supported by the RedCap UE after the frequency modulation includes the required RO in the frequency domain. Alternatively, a separate initial UL BWP is configured for RedCap UE. Alternatively, the random access resource or the initial UL BWP configured by the network device is always within the bandwidth range of the RedCap UE. Alternatively, a separate random access resource is configured for the RedCap UE.

However, the above solutions have limitations and influences on the existing random access configuration and initial UL BWP configuration, and cannot allocate the effective random access resource for the RedCap UE.

The technical solutions of the embodiments of the present disclosure may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a LTE system, a LTE Frequency Division Duplex (FDD) system, a LTE Time Division Duplex (TDD) system and an Advanced Long-Term Evolution (LTE-A) system, an NR system, an Evolution System of the NR system, a LTE-based Access to Unlicensed Spectrum (LTE-U) system, an NR-based Access to Unlicensed Spectrum (NR-U) system, a Universal Mobile Telecommunications System (UMTS), a World Interoperability for Microwave Access (WiMAX) communication system, a Wireless Local Area Networks (WLAN), a Wireless Fidelity (WiFi), a Next Generation Communication Systems or other communication systems, etc.

The system architecture and service scenario described in the embodiments of the present disclosure are intended to more clearly explain the technical solutions of the embodiments of the present disclosure, and do not constitute a limitation to the technical solutions provided by the embodiments of the present disclosure. The ordinary skilled person in the art can see that the technical solutions provided by the embodiments of the present disclosure are equally applicable to similar technical problems with the evolution of the network architecture and the emergence of new service scenarios.

The network device in the embodiments of the present disclosure may be a common base station (such as NodeB or eNB or gNB), a new radio controller (NR controller), a centralized unit (centralized unit), a new radio base station, a remote radio unit, a micro base station, a relay, a distributed unit, a transmission reception point (TRP), a transmission point (TP) or any other device. The specific technology and the specific device form adopted by the network device are not limited in the embodiments of the present disclosure. For convenience of description, in all embodiments of the present disclosure, the above device for providing a wireless communication function for a UE is collectively referred to as a network device.

In the embodiments of the present disclosure, the terminal device may be any terminal. For example, the terminal device may be a UE for machine type communication. That is, the terminal device may also be referred to as a UE, a mobile station (MS), a mobile terminal (MS), a terminal (T), and the like. The UE may communicate with one or more core networks via a radio access network (RAN). For example, the UE may be a mobile telephone (or referred to as a "cellular" telephone), a computer with a mobile terminal, etc. For example, the UE may also be a portable, pocket-sized, hand-held, computer-built or vehicle-mounted mobile device that exchanges language and/or data with the radio access network, which is not specifically limited in the embodiments of the present disclosure.

Alternatively, the network device and UE may be deployed on land, which may be indoor or outdoor, hand-held or vehicle-mounted. The UE may also be deployed on the water surface, or may be deployed on airplanes, balloons and artificial satellites in the air. The application scenarios of the network device and the UE would not be limited in embodiments of the present disclosure.

Alternatively, communication between the network device and the UE and between the UEs may be performed through the licensed spectrum, through the unlicensed spectrum, or through both the licensed spectrum and the unlicensed spectrum. Communication between the network device and the UE, and between the UEs may be performed through a spectrum under 7 gigahertz (GHz) or through a spectrum above 7GHz, and may also be performed through the spectrum under 7GHz and the spectrum above 7GHz at the same time. The spectrum resources used between the network device and the UE are not limited in the embodiments of the present disclosure.

In general, conventional communication systems support a limited number of connections and are easy to implement. However, with the development of the communication technology, mobile communication systems would not only support conventional communication, but also support communication such as device to device (D2D) communication, machine to machine (M2M) communication, machine type communication (MTC), vehicle to vehicle (V2V) communication, etc. Embodiments of the present application may also be applied to these communication systems.

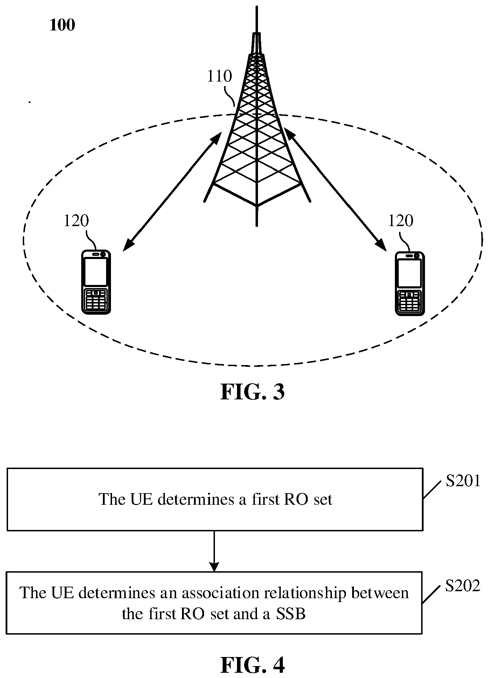

Exemplarily, communication system 100 to which embodiments of the present disclosure are applied is shown in FIG. 3. The communication system 100 may include a network device 110 which may be a device that communicates with a UE 120 (or referred to as a communication terminal, a terminal). The network device 110 may provide communication coverage for a particular geographic area, and may communicate with the UE located within the coverage area. Alternatively, the network device 110 may be a Base Transceiver Station (BTS) in a GSM system or a CDMA system, a NodeB (NB) in a WCDMA system, an Evolutional NodeB (eNB or eNodeB) in the LTE system, or a wireless controller in a Cloud Radio Access Network (CRAN). Alternatively, the network device may be a mobile switching center, a relay station, an access point, a vehicle-mounted device, a wearable device, a hub, a switch, a bridge, a router, a network-side device in the 5th Generation Mobile Communication Technology (5G) network, or a network device in a future evolutional Public Land Mobile Network (PLMN).

The communication system 100 also includes at least one UE 120 located within the coverage area of the network device 110. The "UE" as used herein includes, but is not limited to, a device connected via a wireline (i.e., via a Public Switched Telephone Network (PSTN), a Digital Subscriber Line (DSL), a digital cable, a direct cable connection), and/or via another data connection/network, and/or via a wireless interface (i.e., via a cellular network, a Wireless Local Area Network (WLAN), a digital television network such as a DVB-H network, a satellite network, an AM-FM broadcast transmitter), and/or a device of another UE configured to receive/send a communication signal, and/or Internet of Things (IoT) devices. A UE arranged to communicate through the wireless interface may be referred to as a "wireless communication terminal", a "wireless terminal" or a "mobile terminal". Examples of mobile terminals may include but are not limited to satellite or cellular phones, Personal Communications System (PCS) terminals that can combine cellular radio telephones with data processing, facsimile, and data communication capabilities, a Personal Digital Assistant (PDA) that may include a radio telephone, a pager, an Internet/Intranet access, a Web browser, a notebook, a calendar, and/or a Global Positioning System (GPS) receiver, and conventional laptop and/or handheld receivers or other electronic devices including radio telephone transceivers. The terminal device may refer to an access terminal, a User Equipment (UE), a user unit, a user station, a mobile station, a mobile platform, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network or a terminal device in a future evolutional PLMN, etc.

Alternatively, Device to Device (D2D) communication may be performed between the UEs 120.

Alternatively, the 5G system or 5G network may also be referred to as an NR system or an NR network.

FIG. 3 exemplarily illustrates one network device and two UEs. Alternatively, the communication system 100 may include multiple network devices and other numbers of UEs may be included within the coverage of a network device, which is not limited in embodiments of the present disclosure.

Alternatively, the communication system 100 may further include other network entities such as network controllers, mobility management entities and the like, which are not limited in embodiments of the present disclosure.

It should be understood that a device having a communication function in a network/system in the embodiments of the present disclosure may be referred to as a communication device. Taking the communication system 100 shown in FIG. 3 as an example, the communication device may include a network device 110 and a UE 120 having a communication function and the network device 110 and the UE 120 may be the specific devices described above, which are not repeatedly described here. The communication device may further include other devices in the communication system 100, such as the network controllers, the mobility management entities and other network entities, which are not limited in embodiments of the present disclosure.

As shown in FIG. 4, an alternative process flow of the method for determining a random access resource provided by the embodiment of the present disclosure includes the following operations.

In operation S201, the UE determines a first random access occasion (RO) set.

In some embodiments, the first RO set is determined by the UE according to a bandwidth supported by the UE and a second RO set. The second RO set is carried in RO configuration information sent by the network device to the UE. If the UE is a RedCap UE, ROs within the bandwidth supported by the UE constitute a first RO set. The ROs included in the first RO set may not completely cover all ROs in the second RO set. The first RO set may be the same as the second RO set, that is, the ROs in the first RO set are completely the same as the ROs in the second RO set. The first RO set may belong to the second RO set, that is, the first RO set is a subset of the second RO set, and the ROs included in the first RO set is part of the ROs in the second RO set.

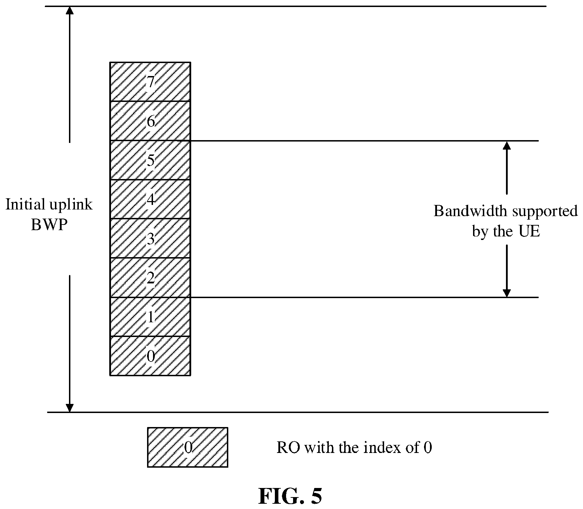

In some embodiments, a diagram of the first RO set and the second RO set is as shown in FIG. 5. If the UE determines an initial uplink bandwidth as a second bandwidth according to initial uplink BWP configuration information from the network device, the UE determines that the second bandwidth includes eight ROs according to the RO configuration information. The eight ROs constitute the second RO set, and the indexes of the eight ROs are 0-7. The bandwidth supported by the UE is a first bandwidth, and the first bandwidth includes four ROs. The four ROs constitute the first RO set, and the indexes of the four ROs are 2-5.

In operation S202, the UE determines an association relationship between the first RO set and a SSB.

In some embodiments, the SSB is all SSBs associated with random access resources of the UE, and the SSB is determined by SSB set indication information sent by the network device.

In some embodiments, the association relationship between the first RO set and the SSB may represent association relationships between each RO within the first RO set and at least one SSB. For example, N SSBs are associated with one RO within the first RO set, or one SSB is associated with X ROs within the first RO set. N and X are positive integers. Alternatively, the association relationship between the first RO set and the SSB may be represented by the parameter ssb-perRACH-Occasion.

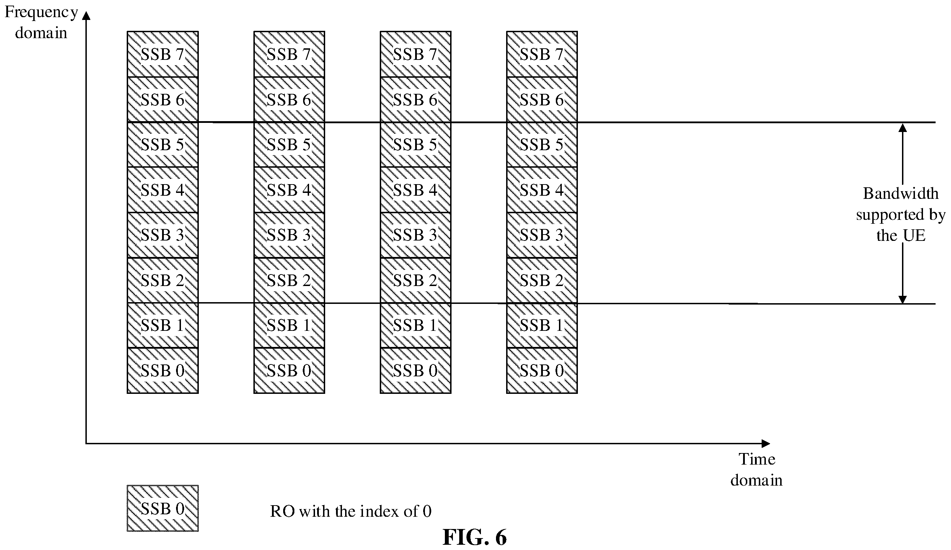

In some embodiments, the second RO set has an association relationship with the SSB. Specifically, the network device may indicate the association relationship between all ROs in the second RO set and all SSBs corresponding to the random access resources of the UE by sending a parameter ssb-perRACH-Occasion to the UE (e.g., a non-RedCap UE). Taking FIG. 6 as an example, in a diagram of an alternative association relationship between the SSB and the RO, the number of SSBs is 8, and the indexes corresponding to the 8 SSBs are 0-7. msg1-FDM is equal to 8, which indicates that the number of ROs in the frequency domain is 8. ssb-perRACH-Occasion is equal to 1, which indicates that one SSB is associated with one RO in the second RO set.

In an alternative embodiment, the UE may determine at least one of following: whether the first RO set includes all ROs within the second RO set, whether the bandwidth supported by the UE is greater than or equal to the initial uplink BWP, or whether the first RO set has been associated with the SSB. The UE determines the association relationship between the first RO set and the SSB according to the determination result.

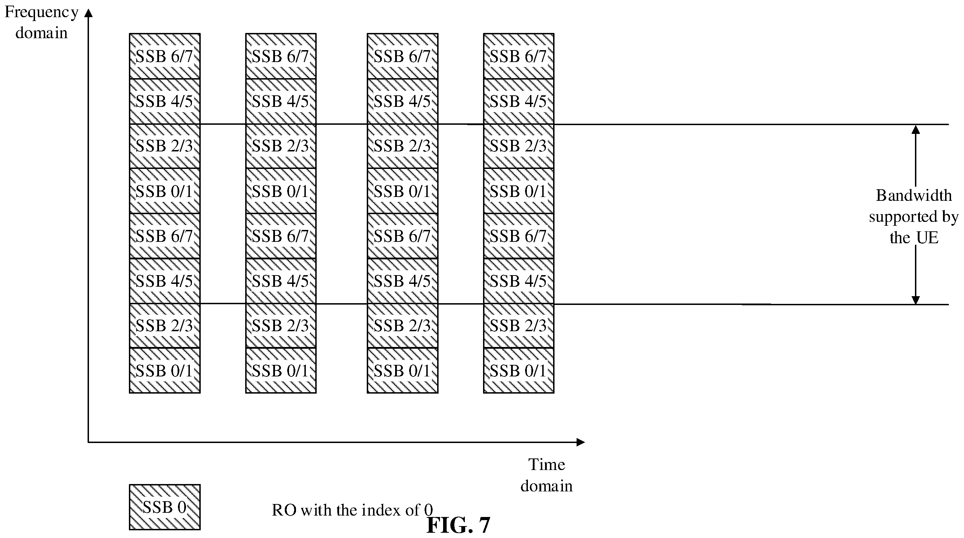

In response to that the first RO set includes all the ROs within the second RO set, or in response to that the bandwidth supported by the UE is greater than or equal to an initial uplink BWP, or in response to that the first RO set has been associated with the SSB, the association relationship between the first RO set and the SSB is determined based on the second RO set. Since the first RO set has covered all the ROs within the second RO set, the association relationship between the first RO set and the SSB can be determined according to the association relationship between the second RO set and the SSB. In the case where the first RO set includes all the ROs in the second RO set and the bandwidth supported by the UE is greater than or equal to the initial uplink BWP, the ROs in the first RO set have covered all the ROs in the second RO set. Since the UE can determine the association relationship between all the ROs in the second RO set and all the SSBs corresponding to the random access resources of the UE according to the parameter SSB-perRACH-Occasion sent by the network device, the association relationship between the second RO set and the SSB can be determined as the association relationship between the first RO set and the SSB. For the scenario where the first RO set has been associated with the SSB, as shown in FIG. 7, although the first RO set within the bandwidth supported by the UE cannot cover all the ROs of the second RO set within the initial uplink bandwidth, when the second RO set is associated with the SSB, the first RO set included in the second RO set has been associated with all SSBs (SSBs with indexes of 0-7) corresponding to the random access resources of the UE. In this scenario, the association relationship between the first RO set and the SSB may be determined according to the association relationship between the second RO set and the SSB. That is, the UE determines the association relationship between the first RO set and the SSB based on the second RO set.

In another alternative embodiment, in response to that the first RO set includes all the ROs within the second RO set, or the bandwidth supported by the UE is greater than or equal to the initial uplink BWP, or the first RO set has been associated with the SSB, the UE may determine the association relationship between the first RO set and the SSB based on the first RO set. That is, all the ROs within the first RO set are associated with the SSB. In the specific implementation, the UE may determine the association relationship between the first RO set and the SSB according to the first configuration information sent by the network device. For the scenario where the ROs within the first RO set have covered all the ROs within the second RO set, or for the scenario as shown in FIG. 7 where although the first RO set within the bandwidth supported by the UE cannot cover the second RO set within the initial uplink bandwidth, the first RO set included in the second RO set has been associated with all SSBs (SSBs with indexes of 0-7) corresponding to the random access resources of the UE when the second RO set is associated with the SSB according to the parameter SSB-perRACH-Occasion, the UE may determine the association relationship between the first RO set and the SSB according to the first RO set. That is, all the ROs within the first RO set are associated with the SSB. In the specific implementation, the UE may determine the association relationship between the first RO set and the SSB according to the first configuration information sent by the network device.

In an alternative embodiment, in response to that the first RO set does not include all the ROs in the second RO set, or the bandwidth supported by the UE is less than the initial uplink BWP, or the first RO set cannot be associated with the SSB, the UE may determine the association relationship between the first RO set and the SSB based on the first RO set. That is, all the ROs in the first RO set are associated with the SSB. In the specific implementation, the UE may determine the association relationship between the first RO set and the SSB according to the first configuration information sent by the network device.

The first configuration information may be separately sent by the network device to the RedCap UE, and is used for configuring the association relationship between the first RO set and all SSBs associated with the random access resources of the UE. The first configuration information may include at least one of a parameter ssb-perRACH-Occasion and a parameter CB-PreamblesPerSSB. The parameter ssb-perRACH-Occasion and/or the parameter CB-PreamblesPerSSB included in the first configuration information may be separately sent by the network device to the RedCap UE and may be suitable for the RedCap UE. That is, the parameter ssb-perRACH-Occasion for configuring the association relationship between the first RO set and the SSB is different from the parameter ssb-perRACH-Occasion for configuring the association relationship between the second RO set and the SSB. The parameter ssb-perRACH-Occasion may be sent by the network device to all UEs (including conventional non-RedCap UEs and the RedCap UEs) and may be suitable for all UEs. That is, the parameter ssb-perRACH-Occasion for configuring the association relationship between the first RO set and the SSB and the parameter ssb-perRACH-Occasion for configuring the association relationship between the second RO set and the SSB may be the same. The parameter SSB-perRACH-Occasion is used for configuring several SSBs to associate one RO in the first RO set, or configuring one SSB to associate several ROs in the first RO set. The preambles used by the RedCap UE in the first RO set is different from the preambles used by the conventional non-RedCap UE in the first RO set. Taking FIG. 5 as an example, the preambles used by the RedCap UE in the ROs with indexes of 2-5 are different from the preambles used by the conventional non-RedCap UE in the ROs with indexes of 2-5.

In some embodiments, in response to that the UE determines the association relationship between the first RO set and the SSB according to the first configuration information sent by the network device, the UE may determine the number of contention based preambles for the UE according to the second configuration information sent by the network device, and determine a respective number of contention based preambles for each SSB within each RO in the first RO set according to the number of contention based preambles for the UE. Specifically, the UE determines the respective number of contention based preambles for each SSB within each RO in the first RO set according to the parameter CB-PreamblesPerSSB.

In the above embodiments, the UE determines how to determine the association relationship between the first RO set and the SSB according to whether the first RO set includes all the ROs within the second RO set, or whether the bandwidth supported by the UE is greater than or equal to the initial uplink BWP, or whether the first RO set has been associated with the SSB. For example, the association relationship between the first RO set and the SSB may be determined based on the second RO set, or the association relationship between the first RO set and the SSB may be determined based on the first RO set.

In other embodiments, the network device may further send third configuration information to the UE. The third configuration information is configured to indicate that the association relationship between the first RO set and the SSB is determined based on the first RO set, or the association relationship between the first RO set and the SSB is determined based on the second RO set. In response to that the third configuration information indicates that the association relationship between the first RO set and the SSB is determined based on the first RO set, the UE establishes the association relationship between all the ROs within the first RO set and the SSB. In response to that the third configuration information indicates that the association relationship between the first RO set and the SSB is determined based on the second RO set, in this scenario, since the first RO set includes all the ROs within the second RO set, the UE determines that the association relationship between the second RO set and the SSB is the association relationship between the first RO set and the SSB.

In some embodiments, the method may further include the following operations.

In operation S200, the UE receives the initial uplink BWP configuration information from the network device. The initial uplink BWP configuration information is configured to configure an initial uplink BWP.

In operation S200', the UE receives the RO configuration information from the network device. The RO configuration information is configured to configure the random access resource of the UE.

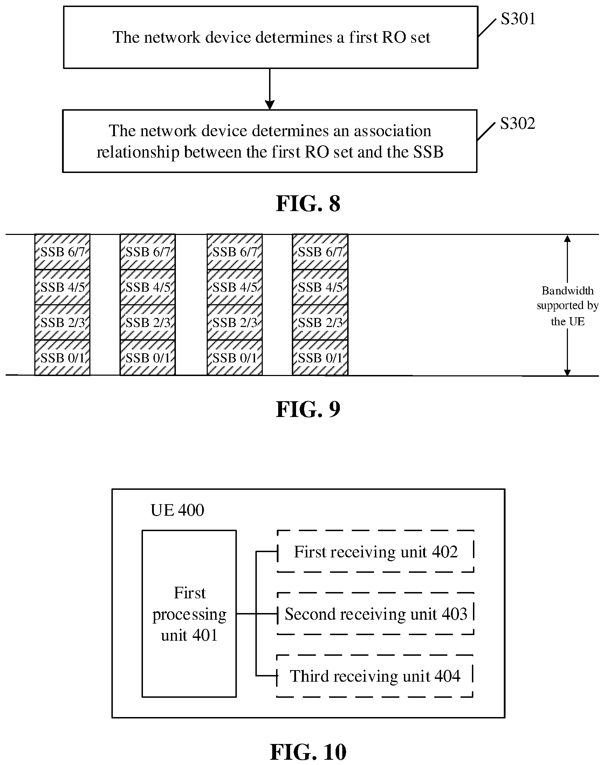

FIG. 8 illustrates another alternative process flow of the method for determining the random access resource provided by the embodiments of the present disclosure, which may include the following operations.

In operation S301, the network device determines a first RO set.

In some embodiments, the process of determining the first RO set by the network device is similar to the process of determining the first RO set by the UE in the operation S201 above, which would not be repeated here.

In operation S302, the network device determines an association relationship between the first RO set and the SSB.

In some embodiments, the association relationship between the first RO set and the SSB may represent association relationships between each RO within the first RO set and at least one SSB. For example, N SSBs are associated with one RO within the first RO set, or one SSB is associated with X ROs within the first RO set. Alternatively, the association relationship between the first RO set and the SSB may be represented by the parameter ssb-perRACH-Occasion..

In some embodiments, the network device determines how to determine the association relationship between the first RO set and the SSB and determines the association relationship between the first RO set and the SSB according to whether the first RO set includes all the ROs within the second RO set in an initial uplink BWP configured by the network device for the UE, or whether the bandwidth supported by the UE is greater than or equal to the initial uplink BWP, or whether the first RO set has been associated with the SSB. The specific implementation process of determining the association relationship between the first RO set and the SSB by the network device is the same as the process that the UE determines how to determine the association relationship between the first RO set and the SSB and determines the association relationship between the first RO set and the SSB according to whether the first RO set includes all the ROs within the second RO set in the initial uplink BWP configured by the network device for the UE, or whether the bandwidth supported by the UE is greater than or equal to the initial uplink BWP, or whether the first RO set has been associated with the SSB, which would not be repeated here.

In some embodiments, the method may further include the following operation.

In operation S303, the network device sends third configuration information to the UE. The third configuration information is configured to indicate that the association relationship between the first RO set and the SSB is determined based on the first RO set, or the association relationship between the first RO set and the SSB is determined based on the second RO set.

In some embodiments, in response to that the third configuration information indicates that the association relationship between the first RO set and the SSB is determined based on the first RO set, the method may further include the following operation.

In operation S304, the network device sends the first configuration information to the UE. The first configuration information is configured to configure the association relationship between the first RO set and the SSB.

The first configuration information may be separately sent by the network device to the RedCap UE, and is used for configuring the association relationship between the first RO set and all SSBs associated with the random access resources of the UE. The first configuration information may include at least one of a parameter ssb-perRACH-Occasion and a parameter CB-PreamblesPerSSB. The parameter ssb-perRACH-Occasion and/or the parameter CB-PreamblesPerSSB included in the first configuration information may be separately sent by the network device to the RedCap UE and may be suitable for the RedCap UE. That is, the parameter ssb-perRACH-Occasion for configuring the association relationship between the first RO set and the SSB is different from the parameter ssb-perRACH-Occasion for configuring the association relationship between the second RO set and the SSB. The parameter ssb-perRACH-Occasion may be sent by the network device to all UEs (including conventional non-RedCap UEs and the RedCap UEs) and may be suitable for all UEs. That is, the parameter ssb-perRACH-Occasion for configuring the association relationship between the first RO set and the SSB and the parameter ssb-perRACH-Occasion for configuring the association relationship between the second RO set and the SSB may be the same.

In some embodiments, the method may further include the following operation.

In operation S305, the network device sends the second configuration information to the UE. The second configuration information is configured to configure a number of preambles for the UE.

In some embodiments, the UE may configure a respective number of contention based preambles for each SSB within each RO in the first RO set based on the number of contention based preambles configured by the second configuration information for the UE.

In some embodiments, the method may further include the following operation.

In operation S306, the network device sends the initial uplink BWP configuration information to the UE. The initial uplink BWP configuration information is configured to configure the initial uplink BWP.

In some embodiments, the method may further include the following operation.

In operation S307, the network device sends RO configuration information to the UE. The RO configuration information is configured to configure the random access resource of the UE.

The method for determining a random access resource provided by the embodiment of the present disclosure would be described below in detail with examples.

In the related art, each SSB in the SSBs indicated by SSB-PositionsInBurst is associated with one or more RACH occasions, and each SSB is further associated with multiple content based preambles. Since each SSB corresponds to a SSB index, each SSB index is associated with a respective portion of the RACH resource configuration indicated by the system message. In some scenarios, if the bandwidth supported by the RedCap UE can only cover part of ROs in the random access resources, the ROs covered by the RedCap UE may not be associated with all SSBs. When the receiving quality of a certain SSB measured by the RedCap UE meets the requirement, the SSB may not be able to be associated with the ROs contained in the bandwidth supported by the RedCap UE, which results in the RedCap UE being unable to select the corresponding random access resource to initiate access. Still taking FIG. 5 as an example, the first RO set includes the ROs with the indexes of 2-5. According to the mapping method of SSBs and ROs in the related art, the ROs associated with the SSBs with the indexes of 2-5 are at least included within the bandwidth supported by the RedCap UE.

In embodiments of the present disclosure, the ROs included within the bandwidth supported by the RedCap UE are separately associated with the SSBs, rather than that the SSBs are associated with all the ROs in the frequency domain in the related art. In the specific implementation, the network device may separately configure the parameter ssb-perRACH-Occasion and the parameter CB-PreamblesPerSSB for the RedCap UE. Since the bandwidth supported by the Reduced Capability UE includes the ROs with the indexes of 2-5, the network device may configure ssb-perRACH-Occasion=2 for the UE. That is, two SSBs are associated with one RO included in the bandwidth supported by the RedCap UE. Specifically, the SSBs with the indexes of 0-7 are associated with the ROs with the indexes of 2-5 included in the bandwidth supported by the RedCap UE, and the association relationship between the first RO set and the SSB is obtained. For example, the SSBs with the indexes of 0 and 1 are associated with the RO with the index of 2; the SSBs with the indexes of 2 and 3 are associated with the RO with the index of 3; the SSBs with the indexes of 4 and 5 are associated with the RO with the index of 4, and the SSBs with the indexes of 6 and 7 are associated with the RO with the index of 5.

In the embodiment of the present disclosure, it may be understood that the ROs with the indexes of 2-5 are the ROs shared by the conventional non-RedCap UE and the RedCap UE. In order to avoid the network device being unable to distinguish the SSBs associated with the random access resources sent by the conventional UE from the SSBs associated with the random access resources sent by the RedCap UE, the conventional UE and the RedCap UE may use different preambles in the shared ROs. The preambles mapped on the non-shared ROs, such as the ROs with the indexes of 0, 1, 6 and 7 are used only by the conventional UE. For the conventional UE, the SSBs are associated with the ROs with the indexes of 0-7, and for the RedCap UE, the SSBs are associated with the ROs with the indexes of 2-5.

According to the method for determining the random access resource provided by the embodiment of the present disclosure, all ROs within the bandwidth supported by the RedCap UE may be mapped to all the SSBs associated with the random access resources. When the RedCap UE selects a SSB, the random access resource associated with the SSB may be obtained. Therefore, the method for determining the random access resource provided by the embodiments of the present disclosure can provide an effective random access resource for the RedCap UE. Moreover, according to the method for determining the random access resource provided by the embodiments of the present disclosure, the RedCap UE does not to perform frequency modulation, or it is not necessary to configure a separate initial uplink BWP for the RedCap UE, so that the prior configuration of the RedCap UE may be used, the compatibility of the system can be improved, and the system complexity and resource overhead can be reduced.

For the scenario that although the first RO set within the bandwidth supported by the UE cannot cover the second RO set within the initial uplink bandwidth, the first RO set included in the second RO set has been associated with all SSBs corresponding to the random access resources of the UE when the second RO set is associated with the SSB according to the parameter SSB-perRACH-Occasion, the association relationship between the first RO set and the SSB may be determined according to the second RO set, or the association relationship between the first RO set and the SSB may be determined according to the first RO set. Still taking FIG. 7 as an example, when ssb-perRACH-Occasion=2 is configured by the network device, it is determined that one RO in the second RO set is associated with two SSBs. The ROs with the index of 2-5 included the bandwidth supported by the RedCap UE constitute the first RO set. The ROs in the first RO set may be mapped to the SSBs with the indexes of 0-7. That is, the ROs in the first RO set may be mapped to all the SSBs in the frequency domain.

Alternatively, when the bandwidth occupied by the second RO set configured by the network device is within the bandwidth supported by the RedCap UE, the association relationship between the first RO set and the SSB may be determined by the second RO set. In this scenario, the first RO set has covered all the ROs in the second RO set, so the association relationship between the second RO set and the SSB is the association relationship between the first RO set and the SSB. Another alternative diagram of the association relationship between the first RO set and the SSB is as shown in FIG. 9. The bandwidth occupied by the second RO set configured by the network device is within the bandwidth supported by the RedCap UE. The SSBs with the indexes of 0 and 1 are associated with the RO with the index of 2; the SSBs with the indexes of 2 and 3 are associated with the RO with the index of 3; the SSBs with the indexes of 4 and 5 are associated with the RO with the index of 4, and the SSBs with the indexes of 6 and 7 are associated with the RO with the index of 5. Thus, the first RO set within the bandwidth supported by the RedCap UE is associated with all the SSBs in the frequency domain.

In order to implement the method for determining a random access resource provided by the embodiments of the present disclosure, the embodiments of the present disclosure further provide a UE. FIG. 10 illustrates a structural diagram of an alternative composition of a UE 400. The UE 400 includes a first processing unit 401.

The first processing unit 401 is configured to determine a first random access occasion (RO) set, and determine an association relationship between the first RO set and a SSB.

The first RO set belongs to a second RO set determined according to RO configuration information; the first RO set is located within a bandwidth supported by the UE, and the SSB is associated with a random access resource of the UE.

In some embodiments, the first RO set is determined by the UE according to the bandwidth supported by the UE and the second RO set.

In some embodiments, the first RO set includes part of or all ROs of the second RO set in a frequency domain.

In some embodiments, the first processing unit 401 is further configured to determine at least one of following.

Whether the first RO set includes all ROs within the second RO set, whether the bandwidth supported by the UE is greater than or equal to an initial uplink Bandwidth Part (BWP), or whether the first RO set has been associated with the SSB.

In some embodiments, in response to that the first RO set includes all ROs within the second RO set, or in response to that the bandwidth supported by the UE is greater than or equal to the initial uplink BWP, or in response to that the first RO set has been associated with the SSB, the association relationship between the first RO set and the SSB is determined based on the second RO set.

In some embodiments, the association relationship between the second RO set and the SSB is configured by a network device.

In some embodiments, the first processing unit 401 is configured to determine the association relationship between the first RO set and the SSB based on the first RO set in response to that the first RO set includes all the ROs within the second RO set, or in response to that the bandwidth supported by the UE is greater than or equal to an initial uplink BWP, or in response to that the first RO set has been associated with the SSB, or in response to that the first RO set does not include all the ROs within the second RO set, or in response to that the bandwidth supported by the UE is less than the initial uplink BWP, or in response to that the first RO set cannot be associated with the SSB. That is, all the ROs within the first RO set are associated with the SSB.

In some embodiments, the first processing unit 401 is further configured to determine a number of contention based preambles for the UE according to second configuration information from a network device.

In some embodiments, the second configuration information is configured to configure a respective number of the contention based preambles within each RO in the first RO set.

In some embodiments, the UE 400 further includes a first receiving unit 402.

The first receiving unit 402 is configured to receive third configuration information. The third configuration information is configured to indicate that the association relationship between the first RO set and the SSB is determined based on the first RO set, or the association relationship between the first RO set and the SSB is determined based on the second RO set.

In some embodiments, the first processing unit 401 is configured to determine, according to an indication of the third configuration information, the association relationship between the first RO set and the SSB based on the first RO set, or the first processing unit is configured to determine, according to the indication of the third configuration information, the association relationship between the first RO set and the SSB based on the second RO set.

In some embodiments, the association relationship between the first RO set and the SSB determined based on the first RO set is determined by first configuration information received by the UE.

In some embodiments, the UE 400 further includes a second receiving unit 403.

The second receiving unit 403 is configured to receive initial uplink BWP configuration information from a network device. The initial uplink BWP configuration information is configured to configure the initial uplink BWP.

In some embodiments, the UE 400 further includes a third receiving unit 404.

The third receiving unit 404 is configured to receive the RO configuration information from the network device. The RO configuration information is configured to configure the random access resource of the UE.

In some embodiments, the UE 400 is a RedCap UE.

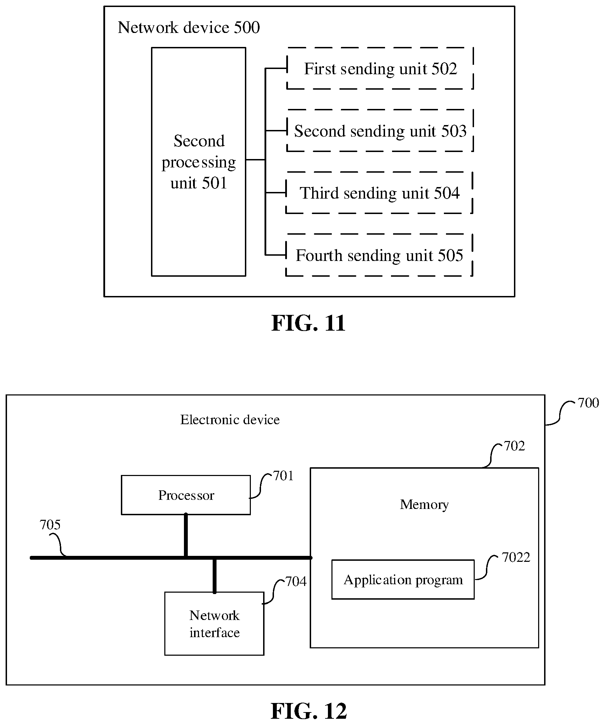

In order to implement the method for determining a random access resource provided by the embodiment of the present disclosure, the embodiments of the present disclosure further provide a network device. FIG. 11 is a structural diagram of an alternative composition of a network device. The network device 500 includes a second processing unit 501.

The second processing unit 501 is configured to determine a first random access occasion (RO) set, and determine an association relationship between the first RO set and a SSB.

The first RO set belongs to a second RO set configured by RO configuration information, the first RO set is located within a bandwidth supported by a UE, and the SSB is associated with a random access resource of the UE.

In some embodiments, the first RO set is determined by the UE according to the bandwidth supported by the UE and the second RO set.

In some embodiments, the first RO set includes part of or all ROs of the second RO set in a frequency domain.

In some embodiments, the second processing unit 501 is further configured to determine whether the first RO set includes all ROs within the second RO set.

In some embodiments, in response to that the first RO set includes all ROs within the second RO set, or in response to that the bandwidth supported by the UE is greater than or equal to an initial uplink BWP, or in response to that the first RO set has been associated with the SSB, the association relationship between the first RO set and the SSB is determined based on the second RO set.

In some embodiments, the association relationship between the second RO set and the SSB is configured by the network device.

In some embodiments, in response to that the first RO set includes all the ROs within the second RO set, or in response to that the bandwidth supported by the UE is greater than or equal to the initial uplink BWP, or in response to that the first RO set has been associated with the SSB, or in response to that the first RO set does not include all the ROs within the second RO set, or in response to that the bandwidth supported by the UE is less than the initial uplink BWP, or in response to that the first RO set cannot be associated with the SSB, the association relationship between the first RO set and the SSB is determined based on the first RO set.

In some embodiments, the network device 500 further includes a first sending unit 502.

The first sending unit 502 is configured to send first configuration information to the UE. The first configuration information is configured to configure the association relationship between the first RO set and the SSB.

In some embodiments, the first sending unit is further configured to send second configuration information to the UE. The second configuration information is configured to configure a number of contention based preambles for the UE.

In some embodiments, the network device 500 further includes a second sending unit 503.

The second sending unit 503 is configured to send third configuration information. The third configuration information is configured to indicate that the association relationship between the first RO set and the SSB is determined based on the first RO set, or the association relationship between the first RO set and the SSB is determined based on the second RO set.

In some embodiments, the network device 500 further includes a third sending unit 504.

The third sending unit is configured to send initial uplink BWP configuration information to the UE. The initial uplink BWP configuration information is configured to configure the initial uplink BWP.

In some embodiments, the network device further includes a fourth sending unit 505.

The fourth sending unit 505 is configured to send the RO configuration information to the UE. The RO configuration information is configured to configure the random access resource of the UE.

In some embodiments, the UE is a RedCap UE.

It should be noted that in the above embodiments of the present disclosure, the functions of the first processing unit 401 and the second processing unit 501 may be implemented by the processor. The functions of the first sending unit 502, the second sending unit 503 and the third sending unit 504 may be implemented by a transmitter or a transceiver. The functions of the first receiving unit 402, the second receiving unit 403 and the third receiving unit 404 may be implemented by a receiver or a transceiver.

The embodiments of the present disclosure further provide a UE including a processor and a memory for storing a computer program capable of running on the processor. When the processor is configured to run a computer program, the above operations of the method for determining the random access resource performed by the UE are performed.

The embodiments of the present disclosure further provide a network device including a processor and a memory for storing a computer program capable of running on the processor. When the processor is configured to run a computer program, the above operations of the method for determining the random access resource performed by the network device are performed.

The embodiments of the present disclosure further provide a chip. The chip includes a processor for invoking and running a computer program from the memory. The device on which the chip is mounted performs the above method for determining a random access resource performed by the UE.

The embodiments of the present disclosure further provide a chip. The chip includes a processor for invoking and running a computer program from the memory. The device on which the chip is mounted performs the above method for determining a random access resource performed by the network device.

The embodiments of the present disclosure further provide a storage medium, which stores executable programs. When the executable programs are executed by the processor, the method for determining a random access resource performed by the UE is implemented.

The embodiments of the present disclosure further provide a storage medium, which stores executable programs. When the executable programs are executed by the processor, the method for determining a random access resource performed by the network device is implemented.

The embodiments of the present disclosure further provide a computer program product including computer program instructions. The computer program instructions cause a computer to perform the above method for determining a random access resource performed by the UE.

The embodiments of the present disclosure further provide a computer program product including computer program instructions. The computer program instructions cause a computer to perform the above method for determining a random access resource performed by the network device.

The embodiments of the present disclosure further provide a computer program. The computer program causes the computer to perform the above method for determining a random access resource performed by the UE.

The embodiments of the present disclosure further provide a computer program. The computer program causes the computer to perform the above method for determining a random access resource performed by the network device.

FIG. 12 is a structural diagram of the hardware composition of an electronic device (UE or network device) provided by the embodiments of the present disclosure. The electronic device 700 includes at least one processor 701, a memory 702 and at least one network interface 704. The various components in the electronic device 700 are coupled together by a bus system 705. It can be understood that the bus system 705 is configured to implement connection communication between these components. The Bus system 705 includes a power bus, a control bus and a status signal bus in addition to a data bus. However, the various buses are marked as the bus system 705 in FIG. 12 for clarity.

It should be understood that the memory 702 may be volatile memory or non-volatile memory and may also include both volatile and non-volatile memory. The non-volatile memory may be a ROM, a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an Optical Disk, or a Compact Disc Read-Only Memory (CD-ROM). The magnetic surface memory may be a magnetic disk memory or a magnetic tape memory. The volatile memory may be a Random Access Memory (RAM), which serves as an external cache. By way of illustrative but not restrictive description, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 702 described in embodiments of the present disclosure is intended to include but not is limited to these and any other suitable types of memory.

The memory 702 in the embodiments of the present disclosure is used to store various types of data to support the operations of the electronic device 700. Examples of such data include any computer program that can be run on the electronic device 700, such as an application program 7022. The program implementing the method of the embodiments of the present disclosure may be included in the application program 7022.

The methods disclosed in the above embodiments of the present disclosure may be applied to or implemented by the processor 701. The processor 701 may be an integrated circuit chip having signal processing capability. In the process of implementation, the operations of the above methods may be accomplished by an integrated logic circuitry of hardware in the processor 701 or instructions in the form of software. The processor 701 described above may be a general purpose processor, a Digital Signal Processor (DSP) or other programmable logic devices, a discrete gate or transistor logic device, a discrete hardware component or the like. The processor 701 may implement or perform the methods, operations and logic diagrams disclosed in embodiments of the present disclosure. The general purpose processor may be a microprocessor or any conventional processor. The operations of the methods disclosed in combination with the embodiments of the present disclosure may be directly embodied as the completion of the execution of the hardware decoding processor or the completion of the combined execution of the hardware and software modules in the decoding processor. The software module may be located in a storage medium located in a memory 702 and the processor 701 reads the information in the memory 702 to complete the operations of the aforementioned method in conjunction with its hardware.

In an exemplary embodiment, the electronic device 700 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), General Purpose Processors, Controllers, Microcontroller Units (MCUs), Micro Processor Units (MPUs), or other electronic components for performing the aforementioned methods.

The present disclosure is described with reference to flowcharts and/or block diagrams of methods, device (systems) and computer program products according to embodiments of the present disclosure. It should be understood that each flow and/or block in the flowchart and/or block diagram, as well as combinations of the flows and/or blocks in the flowchart and/or block diagram, may be implemented by computer program instructions. These computer program instructions may be provided to a general purpose processor, a special purpose computer, an embedded processor, or other programmable data processing device to generate a machine, such that the device for implementing the functions specified in one or more flows of a flowchart and/or one or more blocks of a block diagram can be produced through the instructions executed by the processor of the computer or other programmable data processing device.

These computer program instructions may also be stored in a computer-readable memory capable of directing a computer or other programmable data processing device to operate in a specific manner, such that the instructions stored in the computer-readable memory can form an article of manufacture including an instruction device. The instruction device is configured to implement the functions specified in one or more flows of the flowchart and/or one or more blocks of the block diagram.

These computer program instructions may also be loaded onto a computer or other programmable data processing device, such that a series of operational operations are performed on the computer or other programmable device to realize computerimplemented processing. Therefore, the instructions performed on the computer or other programmable device provide operations for implementing the functions specified in one or more flows of the flowchart and/or one or more blocks of the block diagram.

It should be understood that the terms "system" and "network" in the present disclosure are often used interchangeably herein. In the present disclosure, the term "and/or" merely represents an association relationship of associated objects, which represents that there may be three relationships. For example, "A and/or B" represents that there are three situations: A exist alone, A and B exist at the same time, and B exist alone. In addition, the character "/" in the present disclosure generally represents an "or" relationship of the associated objects.

The above is only preferred embodiments of the present disclosure, and is not intended to limit the scope of protection of the present disclosure. Any modification, equivalent replacement and improvement made within the spirit and principles of the present disclosure shall be included in the scope of protection of the present disclosure.

**Claims**

1. A method for determining a random access resource, comprising:

    determining, by a User Equipment (UE), a first random access occasion (RO) set; and
    determining, by the UE, an association relationship between the first RO set and a Synchronization Signal Block (SSB),
    wherein the first RO set belongs to a second RO set determined according to RO configuration information, the first RO set is located within a bandwidth supported by the UE, and the SSB is associated with a random access resource of the UE.

2. The method of claim 1, wherein the first RO set is determined by the UE according to the bandwidth supported by the UE and the second RO set.

3. The method of claim 1 or 2, wherein the first RO set comprises part of or all ROs of the second RO set in a frequency domain.

4. The method of any one of claims 1 to 3, further comprising:

determining, by the UE, at least one of:
whether the first RO set comprises all ROs within the second RO set, whether the bandwidth supported by the UE is greater than or equal to an initial uplink Bandwidth Part (BWP), or whether the first RO set is associated with the SSB.

5. The method of any one of claims 1 to 4, further comprising:
in response to that the first RO set comprises all ROs within the second RO set, or in response to that the bandwidth supported by the UE is greater than or equal to an initial uplink Bandwidth Part (BWP), or in response to that the first RO set has been associated with the SSB, determining, based on the second RO set, the association relationship between the first RO set and the SSB.

6. The method of claim 5, wherein an association relationship between the second RO set and the SSB is configured by a network device.

7. The method of any one of claims 1 to 6, further comprising:
in response to that the first RO set comprises all ROs within the second RO set, or in response to that the bandwidth supported by the UE is greater than or equal to an initial uplink Bandwidth Part (BWP), or in response to that the first RO set has been associated with the SSB, or in response to that the first RO set does not comprise all the ROs within the second RO set, or in response to that the bandwidth supported by the UE is less than the initial uplink BWP, or in response to that the first RO set cannot be associated with the SSB, determining, by the UE, the association relationship between the first RO set and the SSB based on the first RO set.

8. The method of claim 7, further comprising:
determining, by the UE, a number of contention based preambles for the UE according to second configuration information from a network device.

9. The method of claim 8, wherein the second configuration information is configured to configure the number of the contention based preambles for the UE.

10. The method of any one of claims 1 to 3, further comprising:
receiving, by the UE, third configuration information, wherein the third configuration information is configured to indicate that the association relationship between the first RO set and the SSB is determined based on the first RO set, or the association relationship between the first RO set and the SSB is determined based on the second RO set.

11. The method of claim 10, wherein the UE determines, according to an indication of the third configuration information, the association relationship between the first RO set and the SSB based on the first RO set, or the UE determines, according to the indication of the third configuration information, the association relationship between the first RO set and the SSB based on the second RO set.

12. The method of any one of claims 7 to 11, wherein the association relationship between the first RO set and the SSB determined based on the first RO set is determined by first configuration information received by the UE.

13. The method of any one of claims 1 to 12, further comprising:
receiving, by the UE, initial uplink Bandwidth Part (BWP) configuration information from a network device, wherein the initial uplink BWP configuration information is configured to configure an initial uplink BWP.

14. The method of any one of claims 1 to 13, further comprising:
receiving, by the UE, the RO configuration information from a network device, wherein the RO configuration information is configured to configure the random access resource of the UE.

15. The method of any one of claims 1 to 14, wherein the UE is a Reduced Capability UE.

16. A method for determining a random access resource, comprising:

determining, by a network device, a first random access occasion (RO) set; and
determining, by the network device, an association relationship between the first RO set and a Synchronization Signal Block (SSB),
wherein the first RO set belongs to a second RO set configured by RO configuration information, the first RO set is located within a bandwidth supported by a User Equipment (UE), and the SSB is associated with a random access resource of the UE.

17. The method of claim 16, wherein the first RO set is determined by the UE according to the bandwidth supported by the UE and the second RO set.

18. The method of claim 16 or 17, wherein the first RO set comprises part of or all ROs of the second RO set in a frequency domain.

19. The method of any one of claims 16 to 18, further comprising:
   determining, by the network device, whether the first RO set comprises all ROs within the second RO set.

20. The method of any one of claims 16 to 19, wherein in response to that the first RO set comprises all ROs within the second RO set, or in response to that the bandwidth supported by the UE is greater than or equal to an initial uplink Bandwidth Part (BWP), or in response to that the first RO set has been associated with the SSB, the association relationship between the first RO set and the SSB is determined based on the second RO set.

21. The method of any one of claims 16 to 20, wherein in response to that the first RO set comprises all ROs within the second RO set, or in response to that the bandwidth supported by the UE is greater than or equal to an initial uplink Bandwidth Part (BWP), or in response to that the first RO set has been associated with the SSB, or in response to that the first RO set does not comprise all the ROs within the second RO set, or in response to that the bandwidth supported by the UE is less than the initial uplink BWP, or in response to that the first RO set cannot be associated with the SSB, the association relationship between the first RO set and the SSB is determined based on the first RO set.

22. The method of claim 21, further comprising:
   sending, by the network device, first configuration information to the UE, wherein the first configuration information is configured to configure the association relationship between the first RO set and the SSB.

23. The method of claim 21 or 22, further comprising:
   sending, by the network device, second configuration information to the UE, wherein the second configuration information is configured to configure a number of contention based preambles for the UE.

24. The method of any one of claims 16 to 23, further comprising:
   sending, by the network device, third configuration information, wherein the third configuration information is configured to indicate that the association relationship between the first RO set and the SSB is determined based on the first RO set, or the association relationship between the first RO set and the SSB is determined based on the second RO set.

25. The method of any one of claims 16 to 24, further comprising:
   sending, by the network device, initial uplink Bandwidth Part (BWP) configuration information to the UE, wherein the initial uplink BWP configuration information is configured to configure an initial uplink BWP.

26. The method of any one of claims 16 to 25, further comprising:
   sending, by the network device, the RO configuration information to the UE, wherein the RO configuration information is configured to configure the random access resource of the UE.

27. The method of any one of claims 16 to 26, wherein the UE is a Reduced Capability UE.

28. A User Equipment (UE), comprising:

   a first processing unit, configured to determine a first random access occasion (RO) set, and determine an association relationship between the first RO set and a Synchronization Signal Block (SSB),
   wherein the first RO set belongs to a second RO set determined according to RO configuration information, the first RO set is located within a bandwidth supported by the UE, and the SSB is associated with a random access resource of the UE.

29. The UE of claim 28, wherein the first RO set is determined by the UE according to the bandwidth supported by the UE and the second RO set.

30. The UE of claim 28 or 29, wherein the first RO set comprises part of or all ROs of the second RO set in a frequency domain.

31. The UE of any one of claims 28 to 30, wherein,
the first processing unit is further configured to determine at least one of:
whether the first RO set comprises all ROs within the second RO set, whether the bandwidth supported by the UE is greater than or equal to an initial uplink Bandwidth Part (BWP), or whether the first RO set is associated with the SSB.

32. The UE of any one of claims 28 to 31, wherein in response to that the first RO set comprises all ROs within the second RO set, or in response to that the bandwidth supported by the UE is greater than or equal to an initial uplink Bandwidth Part (BWP), or in response to that the first RO set has been associated with the SSB, the association relationship between the first RO set and the SSB is determined based on an association relationship between the second RO set and the SSB.

33. The UE of claim 32, wherein the association relationship between the second RO set and the SSB is configured by a network device.

34. The UE of any one of claims 28 to 33, wherein the first processing unit is configured to determine the association relationship between the first RO set and the SSB based on the first RO set in response to that the first RO set comprises all ROs within the second RO set, or in response to that the bandwidth supported by the UE is greater than or equal to an initial uplink Bandwidth Part (BWP), or in response to that the first RO set has been associated with the SSB, or in response to that the first RO set does not comprises all the ROs within the second RO set, or in response to that the bandwidth supported by the UE is less than the initial uplink BWP, or in response to that the first RO set cannot be associated with the SSB.

35. The UE of claim 34, wherein the first processing unit is further configured to determine a number of contention based preambles for the UE according to second configuration information from a network device.

36. The UE of claim 35, wherein the second configuration information is configured to configure the number of the contention based preambles for the UE.

37. The UE of any one of claims 28 to 30, further comprising:
a first receiving unit, configured to receive third configuration information, wherein the third configuration information is configured to indicate that the association relationship between the first RO set and the SSB is determined based on the first RO set, or the association relationship between the first RO set and the SSB is determined based on the second RO set.

38. The UE of claim 37, wherein the first processing unit is configured to determine, according to an indication of the third configuration information, the association relationship between the first RO set and the SSB based on the first RO set, or the first processing unit is configured to determine, according to the indication of the third configuration information, the association relationship between the first RO set and the SSB based on the second RO set.

39. The UE of any one of claims 34 to 38, wherein the association relationship between the first RO set and the SSB determined based on the first RO set is determined by first configuration information received by the UE.

40. The UE of any one of claims 28 to 39, further comprising:
a second receiving unit, configured to receive initial uplink Bandwidth Part (BWP) configuration information from a network device, wherein the initial uplink BWP configuration information is configured to configure an initial uplink BWP.

41. The UE of any one of claims 28 to 40, further comprising:
a third receiving unit, configured to receive the RO configuration information from a network device, wherein the RO configuration information is configured to configure the random access resource of the UE.

42. The UE of any one of claims 28 to 41, wherein the UE is a Reduced Capability UE.

43. A network device, comprising:

a second processing unit, configured to determine a first random access occasion (RO) set, and determine an association relationship between the first RO set and a Synchronization Signal Block (SSB), wherein the first RO set belongs to a second RO set configured by RO configuration information, the first RO set is located within a bandwidth supported by a User Equipment (UE), and the SSB is associated with a random access resource of the UE.

44. The network device of claim 43, wherein the first RO set is determined by the UE according to the bandwidth supported by the UE and the second RO set.

45. The network device of claim 43 or 44, wherein the first RO set comprises part of or all ROs of the second RO set in a frequency domain.

46. The network device of any one of claims 43 to 45, wherein the second processing unit is further configured to determine whether the first RO set comprises all ROs within the second RO set.

47. The network device of any one of claims 43 to 46, wherein in response to that the first RO set comprises all ROs within the second RO set, or in response to that the bandwidth supported by the UE is greater than or equal to an initial uplink Bandwidth Part (BWP), or in response to that the first RO set has been associated with the SSB, the association relationship between the first RO set and the SSB is determined based on the second RO set.

48. The network device of any one of claims 43 to 47, wherein in response to that the first RO set comprises all ROs within the second RO set, or in response to that the bandwidth supported by the UE is greater than or equal to an initial uplink Bandwidth Part (BWP), or in response to that the first RO set has been associated with the SSB, or in response to that the first RO set does not comprise all the ROs within the second RO set, or in response to that the bandwidth supported by the UE is less than the initial uplink BWP, or in response to that the first RO set cannot be associated with the SSB, the association relationship between the first RO set and the SSB is determined based on the first RO set.

49. The network device of claim 48, further comprising:
a first sending unit, configured to send first configuration information to the UE, wherein the first configuration information is configured to configure the association relationship between the first RO set and the SSB.

50. The network device of claim 48 or 49, wherein the first sending unit is further configured to send second configuration information to the UE, wherein the second configuration information is configured to configure a number of contention based preambles for the UE.

51. The network device of any one of claims 43 to 50, further comprising:
a second sending unit, configured to send third configuration information, wherein the third configuration information is configured to indicate that the association relationship between the first RO set and the SSB is determined based on the first RO set, or the association relationship between the first RO set and the SSB is determined based on the second RO set.

52. The network device of any one of claims 43 to 51, further comprising:
a third sending unit, configured to send initial uplink Bandwidth Part (BWP) configuration information to the UE, wherein the initial uplink BWP configuration information is configured to configure an initial uplink BWP.

53. The network device of any one of claims 43 to 52, further comprising:
a fourth sending unit, configured to send the RO configuration information to the UE, wherein the RO configuration information is configured to configure the random access resource of the UE.

54. The network device of any one of claims 43 to 53, wherein the UE is a Reduced Capability UE.

55. A User Equipment (UE), comprising a processor and a memory for storing a computer program capable of running on the processor,
wherein the processor is configured to perform operations of the method for determining a random access resource of any one of claims 1 to 15 when running the computer program.

56. A network device, comprising a processor and a memory for storing a computer program capable of running on the processor,
wherein the processor is configured to perform operations of the method for determining a random access resource of any one of claims 16 to 27 when running the computer program.

57. A storage medium having stored thereon an executable program that, when executed by a processor, implements the method for determining a random access resource of any one of claims 1 to 15.

58. A storage medium having stored thereon an executable program that, when executed by a processor, implements the method for determining a random access resource of any one of claims 16 to 27.

59. A computer program product, comprising computer program instructions causing a computer to perform the method for determining a random access resource of any one of claims 1 to 15.

60. A computer program product, comprising computer program instructions causing a computer to perform the method for determining a random access resource of any one of claims 16 to 27.

61. A computer program causing a computer to perform the method for determining a random access resource of any one of claims 1 to 15.

62. A computer program causing a computer to perform the method for determining a random access resource of any one of claims 16 to 27.

63. A chip, comprising: a processor for invoking and running a computer program from a memory to cause a device on which the chip is mounted to perform the method for determining a random access resource of any one of claims 1 to 15.

64. A chip, comprising: a processor for invoking and running a computer program from a memory to cause a device on which the chip is mounted to perform the method for determining a random access resource of any one of claims 16 to 27.

msg1-FrequencyStart

Uplink BWP

RO with the index of 0

FIG. 1

RO corresponding to the
SSB with the index of 0

**FIG. 2**

**100**

**FIG. 3**

| | |
|---|---|
| The UE determines a first RO set | S201 |

| | |
|---|---|
| The UE determines an association relationship between the first RO set and a SSB | S202 |

**FIG. 4**

**FIG. 5**

EP 4 304 256 A1

Frequency
domain

| SSB 7 | SSB 7 | SSB 7 | SSB 7 |
| SSB 6 | SSB 6 | SSB 6 | SSB 6 |
| SSB 5 | SSB 5 | SSB 5 | SSB 5 |
| SSB 4 | SSB 4 | SSB 4 | SSB 4 |
| SSB 3 | SSB 3 | SSB 3 | SSB 3 |
| SSB 2 | SSB 2 | SSB 2 | SSB 2 |
| SSB 1 | SSB 1 | SSB 1 | SSB 1 |
| SSB 0 | SSB 0 | SSB 0 | SSB 0 |

Bandwidth
supported by
the UE

Time
domain

| SSB 0 | RO with the index of 0

**FIG. 6**

Frequency
domain

| | | | |
|---|---|---|---|
| SSB 6/7 | SSB 6/7 | SSB 6/7 | SSB 6/7 |
| SSB 4/5 | SSB 4/5 | SSB 4/5 | SSB 4/5 |
| SSB 2/3 | SSB 2/3 | SSB 2/3 | SSB 2/3 |
| SSB 0/1 | SSB 0/1 | SSB 0/1 | SSB 0/1 |
| SSB 6/7 | SSB 6/7 | SSB 6/7 | SSB 6/7 |
| SSB 4/5 | SSB 4/5 | SSB 4/5 | SSB 4/5 |
| SSB 2/3 | SSB 2/3 | SSB 2/3 | SSB 2/3 |
| SSB 0/1 | SSB 0/1 | SSB 0/1 | SSB 0/1 |

Bandwidth
supported by
the UE

Time
domain

| |
|---|
| SSB 0 |

RO with the index of 0

**FIG. 7**

```
┌─────────────────────────────────────────────┐
│                                             │  ╱ S301
│   The network device determines a first RO set │
│                                             │
└─────────────────────────────────────────────┘
                      │
                      ▼
┌─────────────────────────────────────────────┐
│   The network device determines an association │  ╱ S302
│   relationship between the first RO set and the SSB │
│                                             │
└─────────────────────────────────────────────┘
```

**FIG. 8**

**FIG. 9**

**FIG. 10**

Network device 500

Second processing unit 501

First sending unit 502

Second sending unit 503

Third sending unit 504

Fourth sending unit 505

**FIG. 11**

Electronic device

700

Processor 701

Memory 702

705

Network interface 704

Application program 7022

**FIG. 12**

## INTERNATIONAL SEARCH REPORT

| International application No. |
| --- |
| **PCT/CN2021/078767** |

| | |
| --- | --- |
| **A. CLASSIFICATION OF SUBJECT MATTER** | |
| H04W 72/02(2009.01)i | |
| According to International Patent Classification (IPC) or to both national classification and IPC | |

**B. FIELDS SEARCHED**

Minimum documentation searched (classification system followed by classification symbols)

H04W; H04L; H04M

Documentation searched other than minimum documentation to the extent that such documents are included in the fields searched

Electronic data base consulted during the international search (name of data base and, where practicable, search terms used)

3GPP; IEEE; VEN; EPTXT; USTXT; WOTXT; CNABS; CNTXT; CNKI: 随机接入, 时机, 机会, 资源, 实际, 前导, 集合, 同步信号块, 支持, 带宽, 窄带, RACH, RAO, SSB, random access, occasion, resource, collection, narrowband

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109644432 A (OPPO GUANGDONG MOBILE TELECOMMUNICATIONS CO., LTD.) 16 April 2019 (2019-04-16) description paragraphs [0093]-[0098], [0170]-[0172], [0209]-[0218], [228] | 1-64 |
| Y | CN 108809602 A (BEIJING SAMSUNG COMMUNICATION TECHNOLOGY RESEARCH CO., LTD.) 13 November 2018 (2018-11-13) description, paragraphs [0066]-[0071] | 1-64 |
| A | CN 110024471 A (OPPO GUANGDONG MOBILE TELECOMMUNICATIONS CO., LTD.) 16 July 2019 (2019-07-16) entire document | 1-64 |
| A | WO 2020029173 A1 (SHANGHAI NOKIA BELL CO., LTD.) 13 February 2020 (2020-02-13) entire document | 1-64 |
| A | CN 110495192 A (BEIJING XIAOMI MOBILE SOFTWARE CO., LTD.) 22 November 2019 (2019-11-22) entire document | 1-64 |
| A | WO 2021028031 A1 (NOKIA TECHNOLOGIES OY) 18 February 2021 (2021-02-18) entire document | 1-64 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 November 2021** | **22 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/078767**

| Patent document cited in search report | | | Publication date (day/month/year) | Patent family member(s) | | | Publication date (day/month/year) |
|---|---|---|---|---|---|---|---|
| CN | 109644432 | A | 16 April 2019 | WO | 2018120103 | A1 | 05 July 2018 |
| | | | | TW | 201824930 | A | 01 July 2018 |
| CN | 108809602 | A | 13 November 2018 | EP | 3636035 | A1 | 15 April 2020 |
| | | | | EP | 3636035 | A4 | 06 May 2020 |
| | | | | US | 2020154377 | A1 | 14 May 2020 |
| | | | | US | 11051262 | B2 | 29 June 2021 |
| | | | | KR | 20190138814 | A | 16 December 2019 |
| | | | | KR | 102284140 | B1 | 02 August 2021 |
| | | | | IN | 201937044540 | A | 20 December 2019 |
| | | | | WO | 2018203724 | A1 | 08 November 2018 |
| CN | 110024471 | A | 16 July 2019 | EP | 3550925 | A1 | 09 October 2019 |
| | | | | EP | 3550925 | A4 | 13 November 2019 |
| | | | | EP | 3550925 | B1 | 02 September 2020 |
| | | | | TW | 201822571 | A | 16 June 2018 |
| | | | | WO | 2018103050 | A1 | 14 June 2018 |
| | | | | KR | 20190090842 | A | 02 August 2019 |
| | | | | JP | 2020502900 | A | 23 January 2020 |
| | | | | JP | 6911120 | B2 | 28 July 2021 |
| | | | | US | 2020077445 | A1 | 05 March 2020 |
| | | | | US | 11006458 | B2 | 11 May 2021 |
| | | | | CN | 110024471 | B | 10 November 2020 |
| | | | | HK | 40009397 | A0 | 26 June 2020 |
| | | | | IN | 201917026206 | A | 23 August 2019 |
| WO | 2020029173 | A1 | 23 March 2021 | None | | | |
| CN | 110495192 | A | 22 November 2019 | WO | 2020258080 | A1 | 30 December 2020 |
| WO | 2021028031 | A1 | 18 February 2021 | None | | | |

Form PCT/ISA/210 (patent family annex) (January 2015)